# EUROPÄISCHE PATENTANMELDUNG

(11) **EP 2 487 445 A2**
(43) Veröffentlichungstag der Anmeldung: **15.08.2012**
(21) Anmeldenummer: 12450009.1
(22) Anmeldetag: 14.02.2012
(51) Int. Cl.: F28D 20/02

(54) **Latentwärmespeicher und Verfahren zum Herstellen desselben**

(30) Priorität: 14.02.2011 AT 1902011
(71) Anmelder: Pressl, Daniel G., 9400 Wolfsberg (AT)
(72) Erfinder: Pressl, Daniel G., 9400 Wolfsberg (AT)
(74) Vertreter: Kielmann, Rolf Tobias

(57) **Zusammenfassung**

Ein Latentwärmespeicher (1) ist als halbkugelförmiges Gebilde (11) oder als längliches Gebilde (3), das insbesondere in Form eines Paneels ausgeführt und das mit wenigstens einem Latentwärmespeicherstoff auf Basis von wachsartigen Paraffinkohlenwasserstoffen gefüllt ist. Der Latentwärmespeicherstoff füllt den Innenraum des Gebildes (3) nicht zur Gänze aus, wenn er im festen Zustand vorliegt.

Durch die Schmelz-/Erstarrungswärme bei Phasenübergängen ergibt sich eine Temperaturstabilisierung der Räume, in denen Latentwärmespeicher in Form der Gebilde (3) zugeordnet sind. Dabei können die Gebilde (3) an den Umgrenzungen von Räumen angebracht werden.

Durch die Phasenübergänge ergibt sich eine Anzeige der Umgebungstemperatur des Raumes, in denen Latentwärmespeicher in Form der Gebilde 11 angeordnet sind, da ersichtlich ist, ob die Umgebungstemperatur unter oder über der Schmelztemperatur des Latentwärmespeicherstoffes liegt.

## Beschreibung

Die Erfindung betrifft Latentwärmespeicher, die zur Temperaturstabilisierung, der Temperaturanzeige, sowie zur Raumbeleuchtung Anwendung finden können.

Latentwärmespeicherstoffe (Phasenwechselstoffe oder Phase Change Materials, PCM) für Latentwärmespeicher sind an sich bekannt und werden beispielsweise unter den Markennamen Micronal PCM (Hersteller BASF) oder Rubitherm RT (Hersteller Rubitherm Technologies) vertrieben.

Bei solchen Latentwärmespeicherstoffen handelt es sich beispielsweise um hochreine wachsartige Substanzen, in der Regel auf Basis von Paraffin-Kohlenwasserstoffen, die bei einer Temperatur im Bereich von 16 bis 35°C einer Phasenänderung fest-flüssig oder flüssig-fest unterliegen, wobei die dabei benötigte Wärme (Schmelzwärme) im Falle des Überganges fest-flüssig und freiwerdende Wärme (Erstarrungswärme) im Falle des Überganges flüssig - fest, der Umgebung entnommen bzw. an diese abgegeben wird, sodass eine Temperaturstabilisierung der Umgebungstemperatur erreichbar ist.

Andere Latentwärmespeicherstoffe sind unter anderem Salzhydrate.

Es ist auch schon vorgeschlagen worden, die Paraffine in Mikrokügelchen abgepackt einzusetzen.

Bekannt ist es auch, dass Latentwärmespeicherstoffe in Pakete aus Metall eingefüllt Verwendung finden.

Weiters ist auch bekannt, dass Latentwärmespeicherstoffe in Pakete aus Kunststoff, mit einer zusätzlichen Glasummantelung, als Fensterglasersatz Anwendung finden und werden beispielweise unter dem Namen GLASSX vertrieben.

Alle bekannten Einsatzmöglichkeiten von Latentwärmespeichern zur Temperaturstabilisierung (geschlossener) Räume sind eher mühsam und aufwändig und haben nicht immer den gewünschten Effekt gebracht. Vor allem ist hervorzuheben, dass die bekannten Anwendungen die Phasenumwandlung grundsätzlich nicht zur Temperaturanzeige nützen.

Der Erfindung liegt die Aufgabe zugrunde, einen Latentwärmespeicher der eingangs genannten Gattung anzugeben, mit dem mit einfachen und wirksamen Mitteln ein Stabilisieren der Temperatur, ein Anzeigen der Raumtemperatur, sowie gegebenenfalls eine sich mit dem Aggregatzustand des Latentwärmespeicherstoffes verändernde Beleuchtung des Raumes unter Verwendung von Latentwärmespeicherstoffen erreicht werden kann.

Gelöst wird diese Aufgabe erfindungsgemäß mit einem Latentwärmespeicher, der die Merkmale von Anspruch 1 aufweist.

Bevorzugte und vorteilhafte Ausgestaltung der Erfindung sind Gegenstand der Unteransprüche:
In einer möglichen Ausführungsform ist das Gebilde des Latentwärmespeichers, in dem wenigstens ein Latentwärmespeicherstoff enthalten ist, schlauch-, würfel- oder plattenförmig, d.h. seine Länge ist entweder gleich oder größer als seine Querabmessung.
Die Querabmessung liegt beispielsweise in der Größenordnung von 1 mm bis 1000 mm. So kann das, z.B. paneel- oder plattenförmige, Gebilde z.B. in Umgrenzungen von Räumen, verlegt werden, wo ein Stabilisieren der Temperatur erfolgen soll.

Das Herstellen der erfindungsgemäß vorgeschlagenen Gebilde, die mit wenigstens einem Latentwärmespeicherstoff gefüllt sind, ist einfach.

In einer Ausführungsform ist das Gebilde des Latentwärmespeichers als Würfel oder als Hohlwürfel wenigstens teilweise (mit hohlausgebildeten Wänden) ausgebildet. Bezogen auf die Ausführungsform als Würfel, befindet sich der Latentwärmespeicherstoff im Inneren des Würfels. Bezogen auf die Ausführungsform Hohlwürfel, befindet sich der Latentwärmespeicherstoff in hohlen Wänden des Würfels.

Eine weitere mögliche Ausführungsform für das Gebilde des Latentwärmespeichers ist eine Kugel, Halbkugel, oder ein Gebilde mit einer abgerundeten Oberfläche. Hier ist es möglich, dass diese Art von Gebilde innen hohl und sich der Latentwärmespeicherstoff im Innenraum des Gebildes oder in hohl ausgebildeten Wänden des Gebildes befindet. Hier sind insbesondere kleinere Dimensionen von Interesse, mit einem Durchmesser von 1 mm bis 100 mm.

Da der Latentwärmespeicherstoff bei dem erfindungsgemäßen Latentwärmespeicher in einem einfach aufstellbaren Gebilde enthalten ist, ist dessen Anordnung in einem Raum mit einfachen Mitteln möglich.

Die Einfachheit des Gebildes und dessen Transparenz ermöglicht das Erkennen des Phasenzustandes des sich im Inneren des Gebildes befindlichen Latentwärmespeicherstoffes. Dies wiederum macht es möglich, bei flüssigem Zustand des Latentwärmespeicherstoffes, festzustellen, dass die Temperatur des Raumes über der Schmelztemperatur des Latentwärmespeicherstoffes liegen muss. Im Gegensatz dazu ist es möglich, bei festem Zustand des Latentwärmespeicherstoffes, festzustellen, dass die Temperatur des Raumes unter der Schmelztemperatur des Latentwärmespeicherstoffes liegen muss. Ein Ändern der Raumtemperatur kann bei Bedarf vorgenommen werden, um die gewünschte Raumtemperatur zu erhalten.

Der Werkstoff für das Gebilde der erfindungsgemäßen Latentwärmespeicher ist ein wenigstens teilweise transparenter Werkstoff, wie beispielsweise ein Kunststoff oder Glas.

Die Räume, in welchen der erfindungsgemäße Latentwärmespeicher verwendet werden kann, sind Räume, wie Wohnräume, Büroräume, Anhänger, Lastwagen, transportable Büro und Container, insbesondere in Betracht gezogen sind Räume, in denen sich beispielsweise eine oder mehrere Personen aufhalten können.

Das Gebilde des erfindungsgemäßen Latentwärmespeichers, in dem der Latentwärmespeicherstoff enthalten ist, und das beispielsweise in Form eines mit Latentwärmespeicherstoff gefüllten Hohlkammerpaneels vorliegt, kann in an sich beliebigen Längen, vorzugsweise in Längen von 0,5 m, 1 m oder 1,5 m vorliegen. Die Tiefe des Hohlkammerpaneels liegt bevorzugt in der Größenordnung zwischen 3 mm und 3 cm, insbesondere zwischen 1 cm und 2 cm.

Das Gebilde des erfindungsgemäßen Latentwärmespeichers, in dem der Latentwärmespeicher enthalten ist, und das beispielweise in Form eines mit Latentwärmespeicherstoff gefüllten Hohlkammerpaneels vorliegt, kann innen Unterteilungen beinhalten. Diese Kammern bildenden Unterteilungen, können in beliebiger Anzahl vorliegen. Die bevorzugte Anzahl von Unterteilungen kann unter Berücksichtigung der Abmessungen und Form des Gebildes gewählt werden.

Die Enden des Gebildes sind verschlossen, wobei das Verschließen durch Verkleben, Verschweißen oder Verschrauben erfolgen kann.

Es ist auch möglich, dass das Gebilde bereits verschlossen hergestellt wird und wenigstens eine Öffnung für das Befüllen mit dem Latentwärmespeicherstoff aufweist. Weiters ist, in diesem Fall, eine weitere Öffnung bevorzugt, damit beim Befüllen Luft aus dem Gebilde entweichen kann. Sollte das Gebilde mehrere Kammern aufweisen, so sind diese entweder miteinander verbunden, oder jede einzelne Kammer besitzt eine Öffnung zum Befüllen. Die Füllöffnungen werden nach dem Befüllen des Latentwärmespeichers verschlossen, wobei das Verschließen durch Verkleben, Verschweißen, Zustoppeln oder Verschrauben erfolgen kann.

Das Verschließen kann auch mit Hilfe eines Werkstoffes erfolgen, der nur in eine Richtung flüssigkeitsdurchlässig ist, wie dies beispielsweise für den unter der Markenbezeichnung "GORETEX" beschriebenen Werkstoff der Fall ist. Dieser Werkstoff ist in beide Richtungen luftdurchlässig und ermöglicht so ein Verschließen des Gebildes, wobei die Atmungsfähigkeit des Gebildes beibehalten wird. Dies ist vorteilhaft, da sich beim Ändern des Aggregatzustandes des Latentwärmespeicherstoffes dessen Volumen ändert.

Ein Merkmal einer bevorzugten Ausführungsform der Erfindung ist es, dass der Innenraum eines Gebildes, z.B. des Hohlkammerpaneels, nicht zur Gänze mit Latentwärmespeicherstoff gefüllt ist, sodass wenigstens dann im Gebilde ein Freiraum (ein nicht mit Latentwärmespeicherstoff gefüllter Bereich) verbleibt, wenn der Latentwärmespeicherstoff im festen Zustand vorliegt. Beispielsweise kann der Innenraum des Gebildes, in dem der Latentwärmespeicherstoff enthalten ist, wenn der Latentwärmespeicherstoff in seinem flüssigen Zustand vorliegt, zu 75 % bis 99 % gefüllt sein. Wenn hingegen der Latentwärmespeicherstoff in festem Zustand vorliegt, ist es im Rahmen der Erfindung vorteilhaft, wenn der Innenraum des Gebildes nur teilweise mit Latentwärmespeicherstoff gefüllt ist, damit im Gebilde Raum für die Zunahme des Volumens des Latentwärmespeicherstoffes beim Schmelzen vorliegt. Beispielsweise beträgt die Volumenausdehnung beim Übergang fest zu flüssig zwischen 10 und 20%, somit kann der Innenraum des Gebildes, in dem der Latentwärmespeicherstoff enthalten ist, zu 55 % bis 79 % gefüllt sein, wenn der Latentwärmespeicherstoff in seinem festem Zustand vorliegt.

Ein Merkmal einer bevorzugten Ausführungsform der Erfindung ist es, dass der Innenraum eines Gebildes, z.B. einer Hohlkugel, nicht zur Gänze für Latentwärmespeicherstoff zur Verfügung steht, sondern sich im Inneren des Gebildes eine Kammer befindet. In diese Kammer können Gegenstände eingesetzt werden und das auch ohne die Kammer, die für den Latentwärmespeicherstoff vorgesehen ist, zu öffnen.

Die Erfindung bezieht sich auch auf ein Verfahren zum Herstellen erfindungsgemäßer Latentwärmespeicher, bei dem beispielsweise die folgenden Verfahrensschritte ausgeführt werden, wenn das Gebilde, wie bevorzugt, ein Hohlkammerpaneel ist:
- Verschließen der Öffnung(en) des Hohlkammerpaneels, die nach unten gerichtet ist/sind.
- Füllen eines nach unten verschlossenen Hohlkammerpaneels mit flüssigem Latentwärmespeicherstoff.
- Verschließen der übrigen Öffnungen des Paneels, um fertige und verwendbare, erfindungsgemäße Latentwärmespeicher zu erhalten.

Im Rahmen der Erfindung kann vorgesehen sein, dass zwei oder mehrere Gebilde gleichzeitig bearbeitet werden.

Im Rahmen der Erfindung ist es möglich das Gebilde mit der zuletzt verschlossenen Öffnung auch nach unten zu installieren.

Bevorzugte Ausführungsformen der Erfindung lassen sich zudem wie folgt darstellen, wobei Merkmale alternativ oder zusätzlich zueinander vorliegen können:
Das Gebilde kann verschlossene Enden aufweisen. Das Gebilde kann eine im Wesentlichen gleichbleibende, abnehmende oder zunehmende Querschnittsform über die Längserstreckung hinweg besitzen. Die Wand des Gebildes kann aus einem flexiblen oder starren Werkstoff bestehen. Die Wand kann wenigstens teilweise aus Kunststoff, insbesondere einem transparenten Kunststoff, oder aus Glass, oder einer beliebigen Kombination dieser Werkstoffe bestehen. Die Enden des Gebildes können durch Verschweißen, Verkleben oder eine andere Art von Verschluss geschlossen sein. Das Gebilde, welches den Latentwärmespeicher umgibt, kann durch Halterungen oder einen Rahmen mechanisch stabilisiert sein. Der Rahmen muss nicht transparent sein und kann das Gebilde nur teilweise umgeben. Das Gebilde kann wenigstens teilweise mit Latentwärmespeicherstoff gefüllt sein. Der Innenraum des Gebildes kann bei in festem Aggregatszustand befindlichen Latentwärmespeicherstoff nur bis zu 99 % vermindert um die Volumenzunahme bei dem Phasenübergang des Latentwärmespeicherstoffes von fest zu flüssig gefüllt sein. Das Gebilde kann bei im festen Aggregatzustand vorliegendem Latentwärmespeicherstoff zu weniger als etwa 99 % vermindert um die Volumenzunahme bei dem Phasenübergang des Latentwärmespeicherstoffes von fest zu flüssig gefüllt sein. Das Gebilde kann bei im festen Aggregatzustand vorliegendem Latentwärmespeicherstoff zu weniger als etwa 95 % vermindert um die Volumenzunahme bei dem Phasenübergang des Latentwärmespeicherstoffes von fest zu flüssig gefüllt sein. Das Gebilde kann bei im festen Aggregatzustand vorliegendem Latentwärmespeicherstoff zu weniger als etwa 90 % vermindert um die Volumenzunahme bei dem Phasenübergang des Latentwärmespeicherstoffes von fest zu flüssig gefüllt sein. Das Gebilde kann bei im festen Aggregatzustand vorliegendem Latentwärmespeicherstoff zu weniger als etwa 85 % vermindert um die Volumenzunahme bei dem Phasenübergang des Latentwärmespeicherstoffes von fest zu flüssig gefüllt sein. Das Gebilde kann bei im festen Aggregatzustand vorliegendem Latentwärmespeicherstoff zu weniger als etwa 80 % vermindert um die Volumenzunahme bei dem Phasenübergang des Latentwärmespeicherstoffes von fest zu flüssig gefüllt sein. Das Gebilde kann bei im festen Aggregatzustand vorliegendem Latentwärmespeicherstoff zu weniger als etwa 75% vermindert um die Volumenzunahme bei dem Phasenübergang des Latentwärmespeicherstoffes von fest zu flüssig gefüllt sein. Das Gebilde kann mit einem Gemenge aus wenigstens zwei Latentwärmespeichermaterialien gefüllt sein. Die Wand des Gebildes kann aus einem Kunststoff ausgewählt aus der Gruppe bestehend aus Polyethylen, Polyvinylchlorid, Poly(methylmethacrylat) oder Polystyrol bestehen. Das Gebilde kann in seiner Wand einen metallischen Schutzfilm aufweisen. Der Latentwärmespeicherstoff kann wenigstens ein Paraffin sein. Der Latentwärmespeicherstoff kann wenigstens eine wässrige Mischung von wenigstens einem ionischen Salz enthalten. Das Gebilde kann einen Gegenstand enthalten. Die Länge des Gebildes kann 0,5 m, 1,0 m, 1,5 m oder 2 m betragen. Der Rahmen des Gebildes kann aus einem Metall, insbesondere aus Aluminium oder einer Aluminiumlegierung bestehen. Der Latentwärmespeicherstoff kann einen Schmelzbereich von 18 bis 23°C vorzugsweise 21°C aufweisen. Der Latentwärmespeicherstoff kann einen Erstarrungsbereich im Bereich von 22 bis 19°C, insbesondere 22°C, aufweisen. Der Latentwärmespeicherstoff kann einen Schmelzbereich von 25 bis 28°C, insbesondere 27°C, aufweisen. Der Latentwärmespeicherstoff kann einen Erstarrungsbereich von 28 bis 25°C, insbesondere 27°C, aufweisen. Der Latentwärmespeicherstoff kann einen Schmelzbereich von 27 bis 31 °C aufweisen. Der Latentwärmespeicherstoff kann einen Erstarrungsbereich von 31 bis 27°C, insbesondere 29°C, aufweisen. Dem Latentwärmespeicher kann wenigstens eine Lichtquelle zugeordnet sein. Mehrere Latentwärmespeicher können rings um die Lichtquelle angeordnet sein. Dem Latentwärmespeicher kann wenigstens eine Luftströmung erzeugende Einrichtung wie Ventilator, Gebläse, zugeordnet sein. Das Gebilde kann als hohler Zylinder oder hohles Prisma mit als Hohlwand ausgebildeten Mantel, in den Latentwärmespeicherstoff enthalten ist, ausgebildet sein.

Der Latentwärmespeicher oder mehrere Latentwärmespeicher können an wenigstens einem Teil der Umgrenzung eines Raumes, wie Wand, Boden und/oder Decke eines Gebäudes, angeordnet sein. Der Latentwärmespeicher kann an einem Ort in einem Raum, freistehend Platz finden. Der Raum kann ein Wohnraum, ein Büroraum, ein Innenraum eines Anhängers, eines Lastkraftwagens, eines Containers oder der Innenraum eines transportierbaren Büros sein.

Die Erfindung bezieht sich auch auf ein abgeändertes Verfahren zum Herstellen erfindungsgemäßer Latentwärmespeicher, bei dem beispielsweise folgende Verfahrensschritte ausgeführt werden, wenn das Gebilde eine runde Oberfläche besitzt:
- Füllen eines nach unten verschlossenen Gebildes mit einer runden Oberfläche mit flüssigem Latentwärmespeicherstoff.
- Verschließen nach oben gerichteten Öffnungen des Gebildes, um fertige und verwendbare, erfindungsgemäße Latentwärmespeicher zu erhalten.
- Der vorgesehene Verschluss für die nach oben gerichteten Öffnung oder Öffnungen des Gebildes, kann auch auf das Gebilde aufgedreht werden, was zu einem flüssigkeitsundurchlässigen Verschluss führt.
- Es besteht auch die Möglichkeit, dass das Gebilde nur über eine kleine Öffnung befüllt wird, die nach vollständigem Befüllen mittels eines Verschlussorgans (Stopfen) wieder verschlossen wird.

Weitere Einzelheiten und Merkmale der Erfindung ergeben sich aus der nachstehenden Beschreibung bevorzugter Ausführungsbeispiele unter Bezugnahme auf die Zeichnungen.

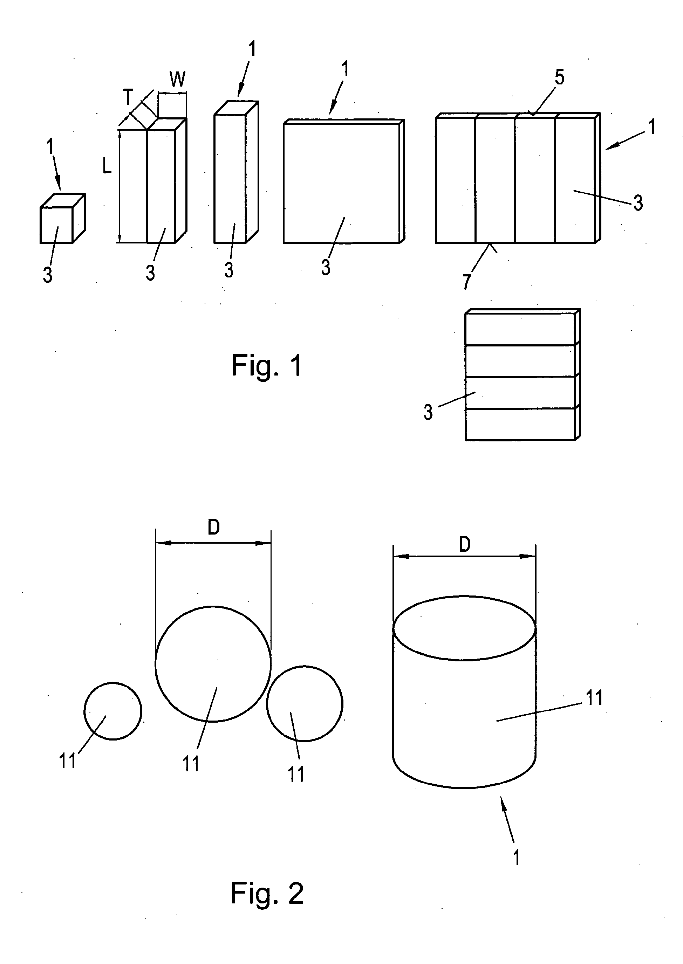

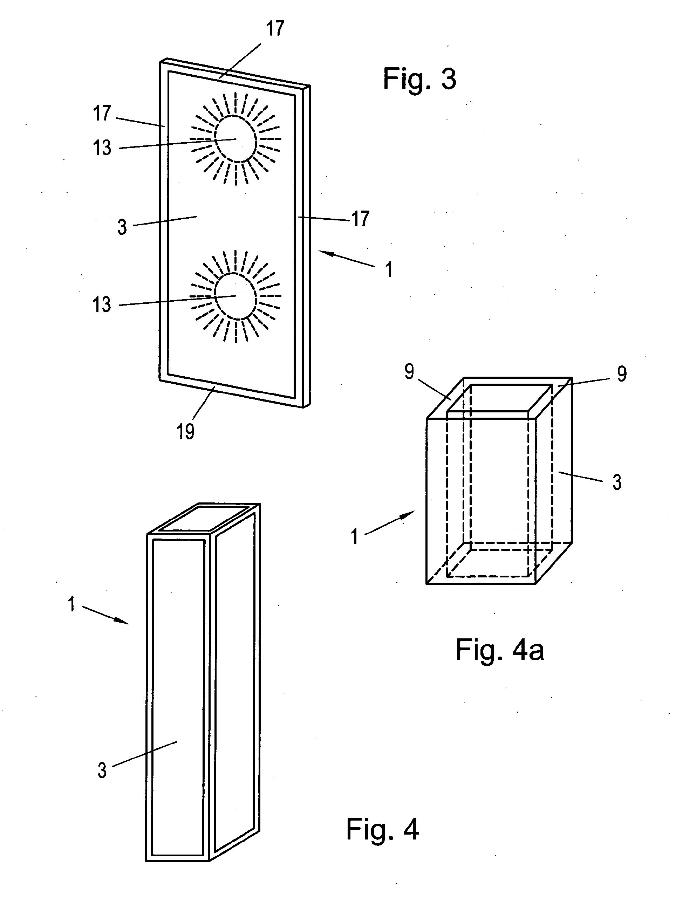

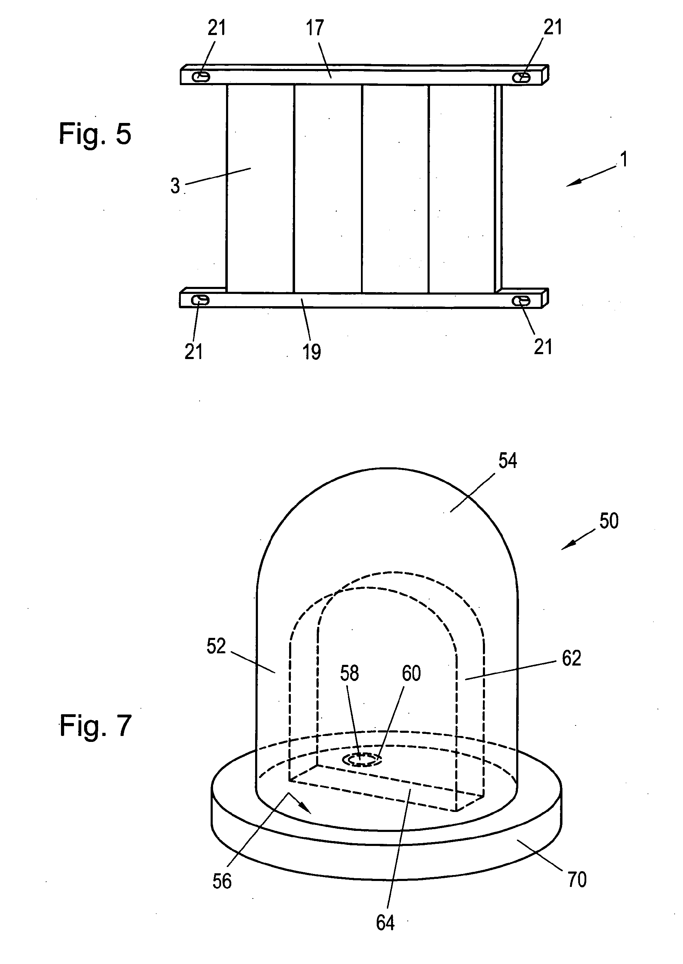

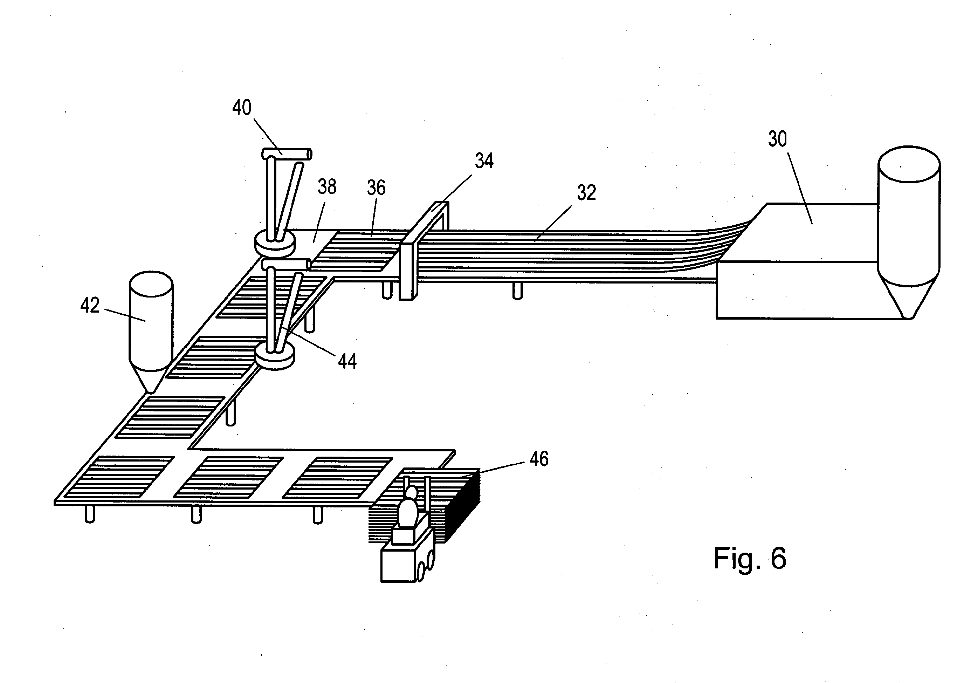

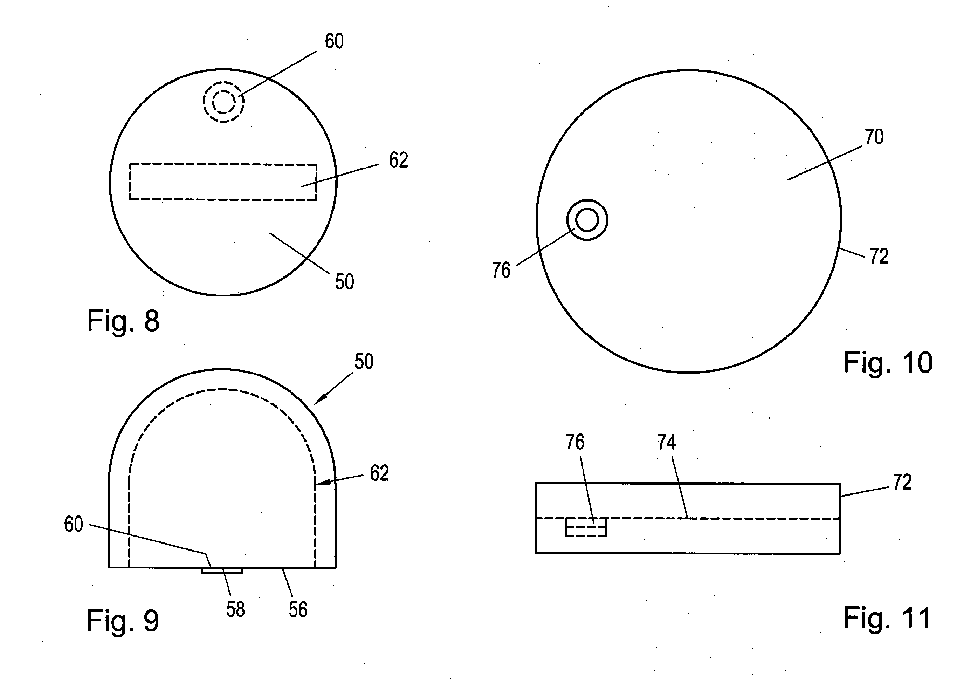

Es zeigt Fig. 1 schematisch Beispiele für erfindungsgemäße Latentwärmespeicher, Fig. 2 schematisch andere Ausführungsbeispiele erfindungsgemäßer Latentwärmespeicher, Fig. 3 eine Kombination eines erfindungsgemäßen Latentwärmespeichers mit einer Lichtquelle, Fig. 4 einen einzelnen Latentwärmespeicher der Anordnung von Fig. 2., Fig. 4a einen quaderförmigen Latentwärmespeicher, Fig. 5. eine Ausführungsform, bei der dem Latentwärmespeichereine Einrichtung zum Befestigen an Wänden und Decken zugeordnet ist, Fig. 6 schematisch eine Anlage zum Herstellen erfindungsgemäßer Latentwärmespeicher, Fig. 7 eine Ausführungsform eines erfindungsgemäßen Latentwärmespeichers mit einer Aussparung zum Einsetzen eines Gegenstandes und die Fig. 8 bis 13 Bestandteile des Latentwärmespeichers von Fig. 7.

Erfindungsgemäße Latentwärmespeicher 1, der in Fig. 1 gezeigten Ausführungsbeispiele umfassen jeweils ein paneelförmiges Gebilde 3. Die Gebilde 3 haben beispielsweise eine Länge von 2 m, 1 m oder 1,5 m. Dies sind freilich nur Beispiele, nachdem jede Länge (L), Breite (W) und Tiefe (T) für Gebilde 3 erfindungsgemäßer Latentwärmespeicher 1 denkbar ist. In Betracht gezogen ist auch eine schlauchförmige Gestalt der Gebilde 3 erfindungsgemäßer Latentwärmespeicher 1.

Der Außendurchmesser D des erfindungsgemäßen Latentwärmespeichers 1, der im in Fig. 2 gezeigten Ausführungsbeispiel ein Gebilde 11, mit einer runden Oberfläche (Kugel oder Zylinder) umfasst, beträgt beispielsweise 10 bis 100 mm und liegt bevorzugt zwischen 5 und 10 cm, insbesonders zwischen 7 und 9 cm.

Der Innenraum des paneelförmigen Gebildes 3, das an seinen beiden Enden 5, 7 (Fig. 1) verschlossen ist, wobei das Verschließen durch Verkleben, Verschweißen oder Verschrauben oder mittels eines Verschlussorgans (Stopfen) erfolgt, ist mit wenigstens einem Latentwärmespeicherstoff gefüllt.

Als Latentwärmespeicherstoffe kommen im Rahmen der Erfindung bevorzugt (hochreine) wachsartige Paraffine zur Anwendung. Beispielsweise in Betracht gezogen sind als Latentwärmespeicher Stoffe, die in der Lage sind, beim Schmelzen (Phasenübergang fest zu flüssig) bei nahezu konstanter Temperatur (große) Wärmemengen zu speichern und bei Bedarf (Erstarren flüssig/fest) wieder abzugeben. So kann unter Verwendung von Latentwärmespeicherstoffen Wärme und "Kälte" effektiv gespeichert werden.

Beispielsweise werden Paraffinwachse eingesetzt, die einen Schmelzbereich von 16 bis 35°C aufweisen. Bevorzugt sind Paraffinwachse mit einem Schmelzbereich von 18 bis 23°C, typischerweise 21°C und einen Erstarrungsbereich von 22 bis 19°C, typischerweise 22°C. Alternativ kann der Schmelzbereich von in erfindungsgemäßen Latentwärmespeichern 1 einsetzbaren Latentwärmespeicherstoffen bei 25 bis 28°C, typischerweise 27°C, und der Erstarrungsbereich bei 28 bis 25°C, typischerweise 27°C, liegen. Es ist aber auch denkbar als erfindungsgemäßen Latentwärmespeicherstoff ein Paraffinwachs einzusetzen, das einen Schmelzbereich von 27 bis 31°C, typischerweise 29°C, und einen Erstarrungsbereich von 31 bis 27°C, typischerweise 29°C, aufweist.

Alle diese Latentwärmespeicherstoffe unterliegen im Phasenübergangsbereich (fest zu flüssig) einer Volumenvergrößerung, die in der Größenordnung von 10 % bis 20 % liegt, weshalb im Rahmen der Erfindung bevorzugt und beispielhaft vorgesehen ist, dass der Innenraum der Gebilde 3 oder 11 nicht zur Gänze mit Latentwärmespeicherstoff gefüllt ist, wenn dieser in festem Zustand vorliegt. Wenn der Latentwärmespeicherstoff dem Phasenübergang fest - flüssig unterworfen war, also flüssig ist, füllt er den Innenraum der Gebilde 3 oder 11 des erfindungsgemäßen Latentwärmespeichers 1 bevorzugt nahezu vollständig aus.

Als Werkstoff, aus dem Gebilde 3 erfindungsgemäßer Latentwärmespeicher 1 bestehen kann, kommen grundsätzlich alle transparenten Werkstoffe in Betracht, wobei Kunststoffe und Glas bevorzugt sind. Dabei ist in Betracht gezogen, dass die Gebilde 3, 11 nur teilweise, aus transparentem Werkstoff bestehen (insbesondere auf ihrer einem Betrachter zugewendeten Seite).

Transparente Kunststoffe, die im Rahmen der Erfindung als Werkstoff für das Gebilde 3 oder 11 in Betracht gezogen sind, schließen ein Polyethylen, Polyvinylchlorid, Poly(methylmethacrylat) und Polystyrol. Im Wesentlichen handelt es sich also bevorzugt um thermoplastische Kunststoffe.

In der Wand der Gebilde 3 oder 11 können auch Metallteilchen gelöst sein (bis zu Nanopartikel). Dies kann Wasserdurchlässigkeit mindern und die thermische Leitfähigkeit des Gebildes erhöhen.

Im Rahmen der Erfindung ist auch in Betracht gezogen, im Latentwärmespeicher 1 ein Gemisch aus wenigstens zwei verschiedenen Latentwärmespeicherstoffen einzusetzen.

Im Rahmen der Erfindung ist auch in Betracht gezogen, im Latentwärmespeicher 1, im Falle der Füllung mit Paraffin, eine brennbarkeitshemmende Substanz einzusetzen. Diese kann sich im Gebilde 3, 11 selbst befinden, gelöst oder in Form von Partikeln oder Nanopartikeln. Die brennbarkeitshemmende Substanz kann dem Latentwärmespeicherstoff beigemengt sein. Diese Substanz kann sich als Anstrich auf der Rückseite des Gebildes 3, 11 befinden. Diese kann sich als Anstrich auch auf der Vorderseite des Gebildes befinden, solange die Transparenz des Gebildes 3, 11 zumindest teilweise noch gegeben ist._Diese kann sich auch in einer beliebigen Anzahl der Kammern alleine befinden.

Zusätzlich kann im Rahmen der Erfindung der Latentwärmespeicherstoff auf Wasser basierende Mischungen von wenigstens einem Salzhydrat enthalten. Beispiele für hier in Betracht gezogene Salzhydrate sind Kaliumfluoridtetrahydrat oder Kalziumchloridhexahydrat. Solche Salzhydrate haben den Effekt, dass die Temperaturstabilisierung verbessert wird. Dadurch, dass die Salzhydrate höhere latente Wärmen besitzen, unterstützen sie die Wirkung des Latentwärmespeicherstoffes in vorteilhafter Weise. Den Salzhydraten können Polyacrylamide und Gelatin-Gele, oder Bentonite und Zeolithe zugesetzt werden.

Des Weiteren können dem Latentwärmespeicherstoff den Phasenübergang flüssig - fest unterstützende Kristallisationskeime zugesetzt werden, um das Entstehen einer unterkühlten flüssigen Phase zu vermeiden. Der Latentwärmespeicherstoff kann auch Partikel oder Nanopartikel enthalten, wie zum Beispiel Gamma-Aluminium-Oxid. Dieser Zusatz erhöht die Wärmeleitfähigkeit des Latentwärmespeicherstoffes, sowie die Fähigkeit Wärme aufzunehmen.

Fig. 5. zeigt eine Ausführungsform des erfindungsgemäßen Latentwärmespeichers 1, bei der das Gebilde 3 über mechanische Unterstützungen 17 und 19 an Decke oder Wänden eines Raumes über Löcher 21 befestigt werden kann. Mechanische Unterstützungen 17, 19 dieser Art können auch an den Seiten des Latentwärmespeichers 1 angebracht werden.

Für das Herstellen erfindungsgemäßer, paneelförmiger Latentwärmespeicher 1 kann die in Fig. 6 gezeigte Anlage verwendet werden, um das erfindungsgemäße Verfahren auszuführen.

Zunächst werden mit Hilfe eines Extruders 30 Hohlkörper 32 extrudiert, dann in einer Vorrichtung 44 zum Ablängen in Paneel-Rohlinge 36 zerschnitten. Die so erhaltenen Rohlinge 36 werden auf einem Förderer 38 zu einer Verschließstation 40 bewegt, in der sie an einem Ende verschlossen werden.

In die so einseitig verschlossenen Paneel-Rohlinge 40 wird in einer Station 42 (flüssiger) Latentwärmespeicherstoff (Paraffin) eingefüllt.

Die so gefüllten Paneele 40 werden daraufhin (Station 44) auch am anderen Ende verschlossen, abgepackt und in der Station 46 zum Versand fertiggemacht.

Wenngleich vorstehend das Herstellen erfindungsgemäßer Latentwärmespeicher 1 in einem wenigstens teilweise automatisierten Verfahren beschrieben ist, können erfindungsgemäße Latentwärmespeicher 1 auch manuell hergestellt werden, indem Latentwärmespeicherstoff, beispielsweise unter Zuhilfenahme von Trichtern, in die beispielsweise paneelförmigen Gebilde eingefüllt wird. Dabei werden die paneelförmigen Gebilde 3 auf beliebige Art und Weise vorher an einem Ende geschlossen und dann nach dem Einfüllen des Latentwärmespeicherstoffes auch am anderen Ende verschlossen.

Fig. 3 zeigt, dass das paneelförmige Gebilde 3 eines Latentwärmespeichers 1 in dem hierfür vorgesehenen Raum an einer Wand angehängt oder sonst wie angebracht, z.B. angeklebt, freistehend angebracht, etc. werden kann.

Bei der in Fig. 3 gezeigten Ausführungsform einer Anordnung mit erfindungsgemäßen Latentwärmespeicher 1, ist diesem eine Lichtquelle 13 zugeordnet, die hinter dem Latentwärmespeicher angeordnet und beliebig ausgebildet ist. Es versteht sich, dass bei der Anordnung von Fig. 3 die Latentwärmespeicher 1, die eine Ausbildung wie in Fig. 1 gezeigt besitzen können, also paneelförmig mit mechanischen Unterstützungen 17 und 19 ausgebildet sind, auch ringsum die Lichtquelle 13 herum angeordnet sein können. Auch muss nicht eine lineare Lichtquelle 13 (längliche Lichtquelle, wie Leuchtmittelröhre oder ähnliches) vorgesehen sein, sondern es können auch mehrere Einzellichtquellen nach Art von Glühbirnen oder LEDs vorgesehen sein. Die Lichtquelle 13 kann auch insbesondere zwischen den mechanischen Unterstützungen 17 und 19 vorgesehen sein.

Bei der Anordnung gemäß Fig. 3 wird der Effekt der Temperaturstabilisierung mit dem Effekt einer Lichtquelle 13 in vorteilhafter Weise kombiniert. Zusätzlich ist die Temperatur des Raumes, in dem die Anordnung (oder mehrere solche Anordnungen, z.B. vier Stück je Quadratmeter Raumfläche) gemäß Fig. 3 steht, daran erkennbar, ob der Latentwärmespeicherstoff in den Latentwärmespeichern 1 fest oder flüssig ist.

Fig. 4 und Fig. 4a zeigen eine Ausführungsform des erfindungsgemäßen Latentwärmespeichers 1, die freistehend in einem Raum angebracht ist.

Eine Variante einer Kombination eines erfindungsgemäßen Latentwärmespeichers 1 mit einer Lichtquelle (nicht in der Skizze eingezeichnet) zeigt Fig. 4, wobei hier der Latentwärmespeicher 1 in Form eines quaderförmigen Gebildes 3 mit Hohlwand 9 (vgl. Fig. 4a) ausgebildet ist, wobei in der hohlen Wand 9 Latentwärmespeicherstoff eingefüllt ist. Die Lichtquelle 13 kann sich an verschiedenen Stellen befinden. Insbesondere befindet sich die Lichtquelle 13 bei dieser Variante in der Mitte des hohlen Gebildes 3.

In Fig. 3 sind der Übersichtlichkeit wegen Lichtquellen oder die Lichtquelle 13 im einzelnen nicht dargestellt, wobei auch in Betracht gezogen ist, die Anordnung gemäß Fig. 3 auch ohne Lichtquelle einfach als Latentwärmespeicher 1 zur Temperaturstabilisierung und Temperaturanzeige heranzuziehen.

Um die temperaturstabilisierende Wirkung der Latentwärmespeicher 1, insbesondere wenn diese wie in den Fig. 3 bis 5 gezeigt, mit oder ohne Lichtquellen 13 kombiniert angeordnet sind, zu verbessern, können den Latentwärmespeichern 1 Luftströme erzeugende Einrichtungen, wie Ventilatoren, Gebläse oder Ähnliches zugeordnet sein.

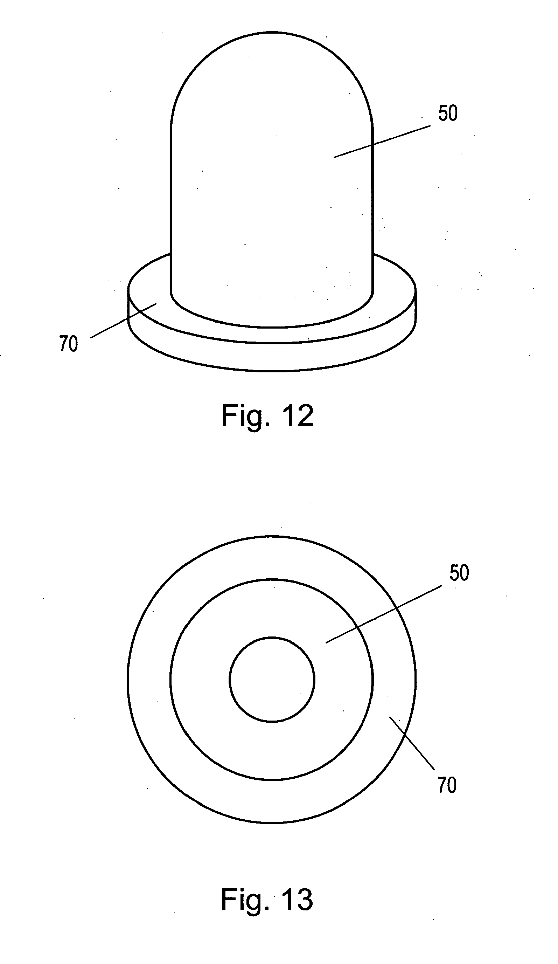

Die in den Fig. 7 bis 12 gezeigte Ausführungsform weist einen Körper 50 auf, der in seinem unteren Bereich 52 im wesentlichen zylinderförmig ist und ein im wesentlichen halbkugelförmiges oberes Ende 54 aufweist. Dieser Körper 50 ist unten durch einen Boden 56 verschlossen, in dem eine mit einem Stopfen 58 (Fig. 12) verschließbare Öffnung 60 vorgesehen ist. Durch die Öffnung 60 kann in den Körper 50 Latentwärmespeicherstoff eingefüllt werden.

In das Innere des Körpers 50 ragt ein unten prismaähnlicher und oben halbrunder Innenteil 62, der mit seinem unteren Rand mit dem Boden 56 des Körpers 50 verbunden ist. Der Innenteil 62 ist unten - wegen einer rechteckigen Öffnung 64 im Boden 56 - offen, sodass ein Gegenstand in den Innenteil 62 eingebracht werden kann.

Der Körper 50 wird mit seinem unteren Ende in eine Grundplatte 70 eingesteckt, wozu diese mit einem nach oben weisenden Rand 72 versehen ist. Damit der Stopfen 58 nicht stört, ist in der Zwischenwand 74 der Bodenplatte 70 eine Vertiefung 76 ausgespart.

Insbesondere kann vorgesehen sein, dass der Körper 50 in den nach oben stehenden Rand 72 der Bodenplatte 70 eingesetzt ist.

Zusammenfassend kann ein Ausführungsbeispiel der Erfindung wie folgt beschrieben werden.

Ein Latentwärmespeicher 1 ist als Gebilde 3, das insbesondere in Form eines Paneels ausgeführt und das mit wenigstens einem Latentwärmespeicherstoff auf Basis von wachsartigen Paraffinkohlenwasserstoffen gefüllt ist. Der Latentwärmespeicherstoff füllt den Innenraum des Gebildes 3 nicht zur Gänze aus, wenn er im festen Zustand vorliegt. Durch die Schmelz-/Erstarrungswärme bei Phasenübergängen ergibt sich eine Temperaturstabilisierung der Räume, in denen Latentwärmespeicher in Form der Gebilde 3 zugeordnet sind. Dabei können die Gebilde 3 an den Umgrenzungen von Räumen angebracht werden und beispielsweise an diesen nebeneinander angeordnet werden. Beschrieben wird auch ein Verfahren zum Herstellen von Latentwärmespeichern 1.

Ein Latentwärmespeicher 9 ist als Gebilde 11, das insbesondere in Form einer Halbkugel ausgeführt und mit wenigstens einem Latentwärmespeicherstoff auf Basis von wachsartigen Paraffinkohlenwasserstoffen gefüllt ist. Der Latentwärmespeicherstoff füllt den Innenraum des Gebildes 11 nicht zur Gänze aus, wenn er im festen Zustand vorliegt. Durch die Schmelz-/Erstarrungswärme bei Phasenübergängen ergibt sich eine Anzeige der Umgebungstemperatur des Raumes, in denen Latentwärmespeicher in Form der Gebilde 11 angeordnet sind. Diese Anzeige beruht darauf, dass ersichtlich ist, ob die Umgebungstemperatur unter oder über der Schmelztemperatur des Latentwärmespeicherstoffes liegt, welcher dann in den damit verbundenen Phasenzuständen vorliegt.

## Patentansprüche

1. Latentwärmespeicher (1), umfassend ein hohles Gebilde (3, 11, 50), das mit wenigstens einem Latentwärmespeicherstoff gefüllt ist, **dadurch gekennzeichnet, dass** das Gebilde (3,11,50) den Latentwärmespeicherstoff umschließt.

2. Speicher nach Anspruch 1, **dadurch gekennzeichnet, dass** das Gebilde (3) verschlossene Enden (5, 7) aufweist, insbesondere dass die Enden (5, 7) des Gebildes (3) durch Verschweißen, Verkleben oder eine andere Art von Verschluss geschlossen sind.

3. Speicher nach Anspruch 1 oder 2, **dadurch gekennzeichnet, dass** das Gebilde (3), vorzugsweise ein hohler Zylinder oder hohles Prisma mit als Hohlwand (9) ausgebildeten Mantel, in den Latentwärmespeicherstoff enthalten ist, eine im Wesentlichen gleichbleibende, abnehmende oder zunehmende Querschnittsform über die Längserstreckung hinweg besitzt, wobei insbesondere die Länge des Gebildes (3) 0,5 m, 1,0 m, 1,5 m oder 2 m beträgt.

4. Speicher nach einem der Ansprüche 1 bis 3, **dadurch gekennzeichnet, dass** die Wand des Gebildes (3, 11, 50) aus einem flexiblen oder starren Werkstoff besteht, insbesondere dass die Wand wenigstens teilweise aus Kunststoff, insbesondere einem transparenten Kunststoff, oder aus Glass, oder einer beliebigen Kombination dieser Werkstoffe besteht, vorzugsweise dass die Wand des Gebildes (3, 11, 50) aus einem Kunststoff ausgewählt aus der Gruppe bestehend aus Polyethylen, Polyvinylchlorid, Poly(methylmethacrylat) oder Polystyrol besteht.

5. Speicher nach einem der Ansprüche 1 bis 4, **dadurch gekennzeichnet, dass** das Gebilde (3) welches den Latentwärmespeicher umgibt, durch Halterungen (17, 19) oder einen Rahmen mechanisch stabilisiert ist, wobei insbesondere der Rahmen das Gebilde (3) nur teilweise umgibt und nicht transparent ist, wobei der Rahmen vorzugsweise aus einem Metall, insbesondere aus Aluminium oder einer Aluminiumlegierung besteht.

6. Speicher nach einem der Ansprüche 1 bis 5, **dadurch gekennzeichnet, dass** das Gebilde (3 oder 11) wenigstens teilweise mit Latentwärmespeicherstoff gefüllt ist, insbesondere dass der Innenraum des Gebildes (3, 11, 50) bei in festem Aggregatszustand befindlichen Latentwärmespeicherstoff nur bis zu 99 % vermindert um die Volumenzunahme bei dem Phasenübergang des Latentwärmespeicherstoffes von fest zu flüssig gefüllt ist.

7. Speicher nach Anspruch 6, **dadurch gekennzeichnet, dass** das Gebilde (3, 11, 50) bei im festen Aggregatzustand vorliegendem Latentwärmespeicherstoff zu weniger als etwa 99 % oder 95 % oder 90 % oder 85 % oder 80 % oder 75 % vermindert um die Volumenzunahme bei dem Phasenübergang des Latentwärme-speicherstoffes von fest zu flüssig gefüllt ist.

8. Speicher nach einem der Ansprüche 1 bis 7, **dadurch gekennzeichnet, dass** das Gebilde (3, 11, 50) mit einem Gemenge aus wenigstens zwei Latentwärmespeichermaterialien gefüllt ist.

9. Speicher nach einem der Ansprüche 1 bis 8, **dadurch gekennzeichnet, dass** das Gebilde (3, 11, 50) in seiner Wand einen metallischen Schutzfilm aufweist.

10. Speicher nach einem der Ansprüche 1 bis 9, **dadurch gekennzeichnet, dass** der Latentwärmespeicherstoff wenigstens ein Paraffin ist und/oder wenigstens eine wässrige Mischung von wenigstens einem ionischen Salz enthält.

11. Speicher nach einem der Ansprüche 1 bis 10, **dadurch gekennzeichnet, dass** der Latentwärmespeicherstoff einen Schmelzbereich von 18 bis 23°C, vorzugsweise 21 °C, und vorzugsweise einen Erstarrungsbereich im Bereich von 22 bis 19°C, insbesondere 22°C aufweist oder dass der Latentwärmespeicherstoff einen Schmelzbereich von 25 bis 28°C, insbesondere 27°C, und vorzugsweise einen Erstarrungsbereich von 28 bis 25°C, insbesondere 27°C aufweist oder dass der Latentwärmespeicherstoff einen Schmelzbereich von 27 bis 31 °C und vorzugsweise einen Erstarrungsbereich von 31 bis 27°C , insbesondere 29°C, aufweist.

12. Speicher nach einem der Ansprüche 1 bis 30, **dadurch gekennzeichnet, dass** dem Latentwärmespeicher (1) wenigstens eine Lichtquelle (13) zugeordnet ist, insbesondere dass mehrere Latentwärmespeicher (1) rings um die Lichtquelle (13) angeordnet sind.

13. Speicher nach einem der Ansprüche 1 bis 12, **dadurch gekennzeichnet, dass** dem Latentwärmespeicher (1) wenigstens eine Luftströmung erzeugende Einrichtung wie Ventilator, Gebläse, zugeordnet ist.

14. Verwendung eines Latentwärmespeicherstoffes nach einem oder mehreren der Ansprüche 1 bis 13, **dadurch gekennzeichnet, dass** der Latentwärmespeicher (1) oder mehrere Latentwärmespeicher (1) an wenigstens einem Teil der Umgrenzung eines Raumes, wie Wand, Boden und/oder Decke eines Gebäudes, angeordnet ist oder dass der Latentwärmespeicher (1) an einem Ort in einem Raum, freistehend Platz findet, wobei vorzugsweise der Raum ein Wohnraum, ein Büroraum, ein Innenraum eines Anhängers, eines Lastkraftwagens, eines Containers oder der Innenraum eines transportierbaren Büros ist.

15. Verfahren zum Herstellen eines Latentwärmespeichers nach einem der Ansprüche 1 bis 33, **gekennzeichnet durch** die Verfahrensschritte:
- Füllen eines hohlen, wenigstens eine Füllöffnung aufzuweisenden Gebildes (3), wie eines Hohlkammerpaneels, mit Latentwärmespeicherstoff in flüssigem Zustand,
- Verschließen, der restlichen Füllöffnung, des gefüllten Gebildes (3) und
- Rahmen des Gebildes (3).
